# EUROPÄISCHE PATENTANMELDUNG

(11) **EP 1 588 919 A1**
(43) Veröffentlichungstag der Anmeldung: **26.10.2005**
(21) Anmeldenummer: 05008315.3
(22) Anmeldetag: 15.04.2005
(51) Int. Cl.: B62D 1/06, B62D 7/22, B62D 1/11

(54) **Fahrzeuglenkrad**

(30) Priorität: 19.04.2004 DE 202004006155 U
(71) Anmelder: TRW Automotive Safety Systems GmbH, 63743 Aschaffenburg (DE)
(72) Erfinder: Eck, Gregor, 63931 Kirchzell (DE)
(74) Vertreter: Kitzhofer, Thomas

(57) **Zusammenfassung**

Ein Fahrzeuglenkrad hat ein Skelett (10) und einen in einem Aufnahmeraum (14) im Skelett (10) untergebrachten Einleger (16) zur Erhöhung des Massenträgheitsmoments. Der Einleger (16) ist durch die an ihm anliegenden Wände des Aufnahmeraums (14) elastisch gebogen und dadurch verspannt im Aufnahmeraum (16) geklemmt und darin gehaltert.

## Beschreibung

Die Erfindung betrifft ein Fahrzeuglenkrad, mit einem Skelett und einem in einem Aufnahmeraum im Skelett untergebrachten Einleger zur Erhöhung des Massenträgheitsmoments.

Es ist bereits bekannt, insbesondere im Bereich des Lenkradkranzes im Skelett einen oder mehrere Einleger unterzubringen. Diese Einleger werden entweder über Klipp-Verbindungen am Skelett gehalten, oder das Skelett wird nach Einsetzen des Einlegers in den Aufnahmeraum plastisch umgeformt. Bei der Auslegung des Skelettes, welches im Gegensatz zum Einleger das lasttragende Teil darstellt, muß jedoch berücksichtigt werden, daß es durch die plastische Umformung an Festigkeit und Steifigkeit verliert. Typische Einleger sind aus Rundstahl und werden mit dem Skelett verstemmt.

Die Erfindung schafft ein Fahrzeuglenkrad, das sich durch eine hohe Stabilität und eine einfache Fertigung auszeichnet.

Dies wird bei einem Fahrzeuglenkrad der eingangs genannten Art dadurch erreicht, daß der Einleger durch die anliegenden Wände des Aufnahmeraums elastisch gebogen und dadurch verspannt im Aufnahmeraum geklemmt und darin gehaltert ist.

Während im Stand der Technik das Skelett plastisch verformt wird, um den Einleger zu umfassen, wird gemäß der Erfindung der Einleger selbst durch das stabilere Skelett gebogen und verspannt. Eine Klipp-Verbindung oder andere Sicherungsmaßnahmen für den Einleger werden damit entbehrlich. Natürlich kann beim Einsetzen des Einlegers und dem damit verbundenen Biegen auch zusätzlich noch eine plastische Verformung desselben erfolgen. Trotz der plastischen Verformung wird der Einleger aber noch genügend Elastizität haben, um sich selbst vorgespannt im Aufnahmeraum zu klemmen. Der Einleger hat eine höhere Dichte als das Skelett und ist vorzugsweise aus Metall, jedoch keinem Leichtmetall.

Der Aufnahmeraum hat vorzugsweise eine offene Einführöffnung für den Einleger, die auch durch keinen Klipp oder dergleichen geschlossen wird. Einzig die Ummantelung des Lenkrads mittels Schaum und/oder Leder umgibt das Skelett und den Einleger.

Die Wände des Aufnahmeraums und der Einleger berühren sich gemäß der bevorzugten Ausführungsform nur abschnittsweise, denn zwischen den Berührstellen sollen Spalte vorgesehen sein, was die elastische Verformung gewährleisten soll.

Die Berührstellen sind vorzugsweise durch Vorsprünge gebildet, die am Einleger oder, was bevorzugt ist, an den Wänden des Aufnahmeraums ausgeformt sind.

Die bevorzugte Ausführungsform sieht vor, daß das Skelett geschlossen ringförmig im Lenkradkranz umläuft und der Einleger im Lenkradkranz, d.h. in dem Teil des Lenkradskeletts, das den Lenkradkranz durchzieht, sitzt.

Der Einleger kann ein Ring sein, der sich im ringförmigen Skelett längs des Lenkradkranzes erstreckt. Dieser Ring kann in sich geschlossen umlaufen und würde in diesem Fall zusammen mit dem Skelett eine Einheit bilden und die Stabilität des Lenkradkranzes deutlich erhöhen.

Das Skelett hat, im radialen Querschnitt gesehen, im Bereich des Lenkradkranzes eine U-förmige, umlaufende Gestalt. Zwischen den Schenkeln des "U" ist dann der Einleger eingepreßt.

Besonders vorteilhaft ist es, wenn sich der Einleger wellenförmig elastisch gebogen im ringförmigen Aufnahmeraum längs des Lenkradkranzes erstreckt. Dies sorgt dafür, daß sich zahlreiche Kontaktstellen ergeben und der Einleger mehrfach in verschiedene Richtungen gebogen ist, was seine Vorspannwirkung verbessert.

Besonders vorteilhaft ist es, wenn der Einleger ein rechteckiges Querschnittsprofil besitzt, und zwar bei einem Schnitt in radialer Richtung. Radial heißt in diesem Fall bezogen auf die Lenkradnabe oder Lenkwelle, die sich durch die Nabe erstreckt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein erfindungsgemäßes Fahrzeuglenkrad,
- Figur 2 eine radiale Schnittansicht durch den Lenkradkranz längs der Linie II-II in Figur 1 und
- Figur 3 eine Ansicht eines Abschnitts des Lenkradkranzes von unten ohne den Schaum und mit am Skelett befestigtem Einleger.

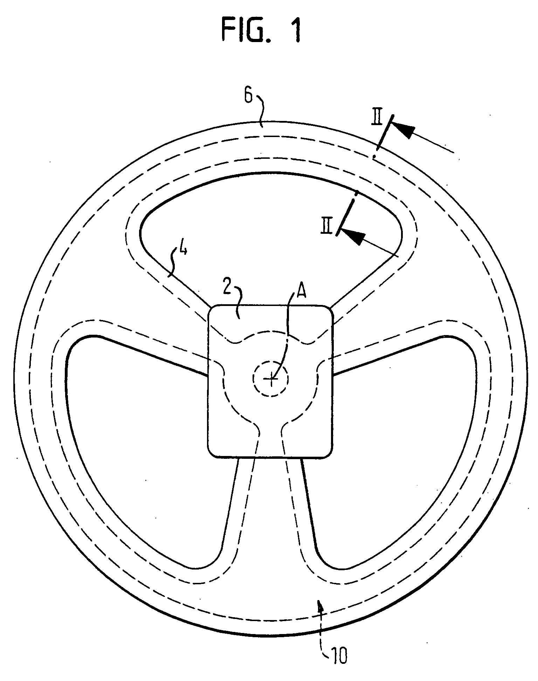

In Figur 1 ist ein Fahrzeuglenkrad dargestellt, das eine sich um die Lenkwellenachse A erstreckende Nabe 2, Speichen 4 und einen kreisringförmigen Lenkradkranz 6 aufweist. Das Lenkrad ist ein Verbundbauteil und besitzt außenseitig eine Haut aus Schaum oder Leder. Auch eine Holzummantelung oder dergleichen ist denkbar.

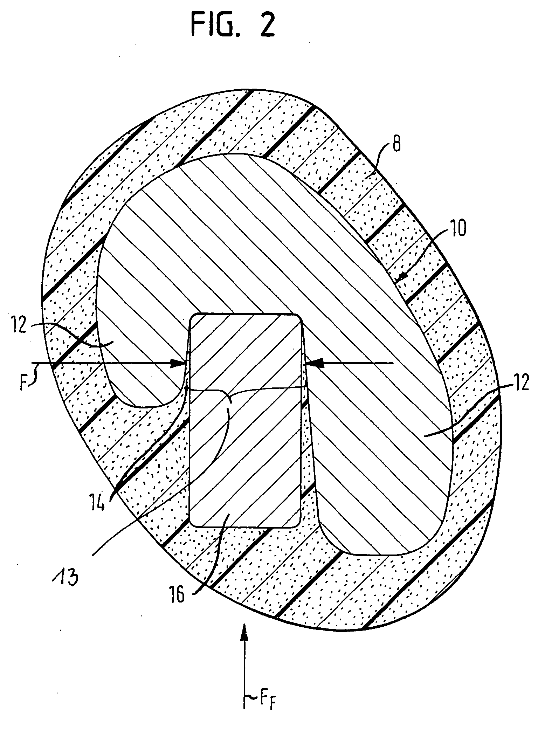

In Figur 2 ist die äußere Schaumschicht 8 besser zu erkennen. Die Stabilität des Lenkrads wird durch ein in seinem Inneren vorgesehenes, einstückiges Lenkradskelett 10 erreicht, das in Figur 1 mit unterbrochenen Linien dargestellt ist. Das Lenkradskelett 10 hat einen kreisringförmigen Abschnitt im Lenkradkranz 6 und Speichenabschnitte, die sich vom Lenkradkranzabschnitt aus zu einem Nabenabschnitt erstrecken.

Das Lenkradskelett 10 ist insbesondere ein Druckgußteil aus Metall. Es besitzt vorzugsweise, im Schnitt gemäß Figur 2 zu erkennen, einen U-förmigen Querschnitt im Bereich des Lenkradkranzes 6, wobei das "U" nach unten (gezeigt) oder oben offen ist und durch zwei Schenkel 12 begrenzt wird. Im Bereich der Speicheneinläufe ist das U-förmige Profil üblicherweise unterbrochen. Zwischen den Schenkeln 12 ergibt sich ein längs des Lenkradkranzes 6 durchgehender mit einer nach unten offenen Einführöffnung 13 versehener Aufnahmeraum 14, in den ein Einleger 16 eingepreßt ist. Der Einleger 16 ist ein geschlossen umlaufender oder geschlitzter Ring, der zur Erhöhung des Massenträgheitsmoments in den Lenkradkranz 6 eingesetzt wird. Alternativ könnten natürlich auch mehrere umfangsmäßig beabstandete Ringsegmente bildende Einleger vorgesehen sein.

Der Einleger 16 wird nur durch eine seitliche Klemmkraft F, die auf ihn durch die Schenkel 12 ausgeübt wird, im Aufnahmeraum 14 gehalten.

Diese Klemmkraft wird dadurch erzeugt, daß der Einleger, der im übrigen ein rechteckiges Querschnittsprofil besitzt, von unten zwischen die Schenkel 12 und die dadurch gebildete Einführöffnung 13 in das Skelett 10 gepreßt wird und hierbei in einer Ebene senkrecht zur Achse A und quer zur Umfangsrichtung elastisch, ggf. auch noch zusätzlich geringfügig plastisch verformt wird.

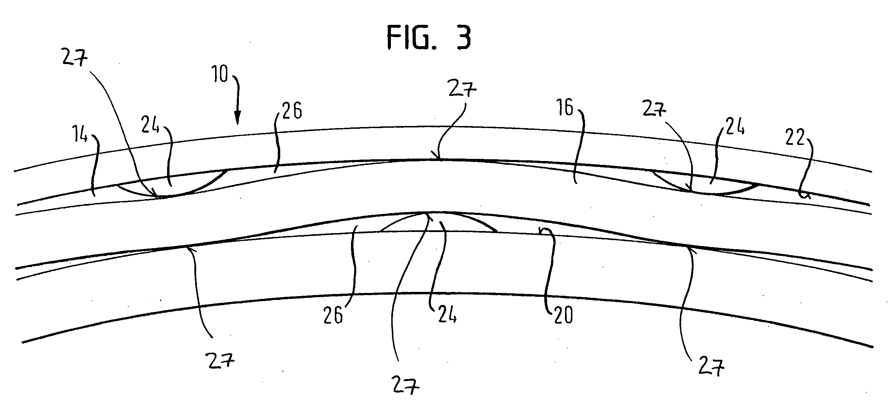

Der Aufnahmeraum 14 verläuft, wie in Figur 3 zu sehen ist, im wesentlichen kreisringförmig. Er besitzt aber in Umfangsrichtung abwechselnd an der Innenwand 20 und der Außenwand 22 abgerundete Vorsprünge 24. An diesen Vorsprüngen 24 liegt der Einleger 16 an, und zwischen den Vorsprüngen 24 ergeben sich Spalte 26 zwischen der Innen- oder Außenwand 20, 22 und dem Einleger 16. Die Berührstellen, an denen sich die Wände 20, 22 bzw. die Vorsprünge 24 und der Einleger 16 berühren, sind mit 27 bezeichnet. Durch die Vorsprünge 424 wird der Einleger 16 wellenförmig mehrfach nach innen und nach außen gebogen, so daß sich eine radiale Vorspannkraft ergibt, mittels der allein er im Aufnahmeraum 14 geklemmt und gehaltert ist.

Alternativen zu diesen Merkmalen sind, daß Gruppen von mehreren Vorsprüngen 24 abwechselnd zuerst an der Innen- und dann an der Außenwand 20, 22 vorgesehen sind und die Gruppen sich abwechseln.

Anstatt wellenförmig kann der Einleger auch aus in Axialsicht unterschiedlich konvex radial nach außen gewölbten Abschnitten zusammengesetzt sein.

Das Fügen von Skelett 10 und Einleger 16 erfolgt nur durch Aufbringen einer axialen Kraft F_{F} (siehe Figur 2).

Durch die Erfindung ergeben sich unter anderem folgende Vorteile:

Da keine oder nur eine geringe plastische Verformung im Einleger auftritt, ist das Fügen materialschonend und weitgehend materialneutral einsetzbar sowie preiswert.

Es können sehr hohe Massenträgheitsmomente durch großvolumige Einleger 16 erreicht werden, da der Bauraum durch das Rechteckprofil im Gegensatz zu den bislang bekannten Rundprofilen aufgrund der platzsparenden Befestigung besser ausgenutzt werden kann.

Die Befestigung des Einlegers 16 und dessen Profil beeinflussen die Steifigkeit und die Festigkeit des Lenkradkranzes 6 positiv, da das Skelettprofil im Bereich des Lenkradkranzes 6 im Hinblick auf eine erhöhte Steifigkeit besser gestaltet werden kann als bei der Verwendung eines Einlegers 16 mit Rundprofil.

## Patentansprüche

1. Fahrzeuglenkrad, mit
einem Skelett (10) und
einem in einem Aufnahmeraum (14) im Skelett (10) untergebrachten Einleger (16) zur Erhöhung des Massenträgheitsmoments,
**dadurch gekennzeichnet, daß**
der Einleger (16) durch die an ihm anliegenden Wände (20, 22) des Aufnahmeraums (14) elastisch gebogen und **dadurch** verspannt im Aufnahmeraum (16) geklemmt und darin gehaltert ist.

2. Fahrzeuglenkrad nach Anspruch 1, **dadurch gekennzeichnet, daß** der Aufnahmeraum (14) eine offene Einführöffnung (13) für den Einleger (16) hat.

3. Fahrzeuglenkrad nach Anspruch 1 oder 2, **dadurch gekennzeichnet, daß** die Wände (20, 22) des Aufnahmeraums (14) und der Einleger (16) sich abschnittsweise berühren und zwischen den Berührstellen (27) Spalten (26) vorgesehen sind.

4. Fahrzeuglenkrad nach Anspruch 3, **dadurch gekennzeichnet, daß** sich in Längsrichtung des Einlegers (16) gesehen auf seinen entgegengesetzt liegenden Seiten Berührstellen (27) in Umfangsrichtung auf gegenüberliegenden Wänden (20, 22) abwechseln.

5. Fahrzeuglenkrad nach Anspruch 3 oder 4, **dadurch gekennzeichnet, daß** die Berührstellen (27) durch Vorsprünge (24) gebildet sind.

6. Fahrzeuglenkrad nach Anspruch 5, **dadurch gekennzeichnet, daß** die Vorsprünge (24) an den Wänden (20, 22) des Aufnahmeraums (14) ausgeformt sind.

7. Fahrzeuglenkrad nach einem der vorhergehenden Ansprüche, **dadurch gekennzeichnet, daß** das Skelett (10) geschlossen ringförmig im Lenkradkranz (6) umläuft und der Einleger (16) im Lenkradkranz (6) sitzt.

8. Fahrzeuglenkrad nach einem der vorhergehenden Ansprüche, **dadurch gekennzeichnet, daß** der Einleger (16) ein Ring ist, der sich im ringförmigen Skelett (10) längs des Lenkradkranzes (6) erstreckt.

9. Fahrzeuglenkrad nach Anspruch 8, **dadurch gekennzeichnet, daß** das Skelett (10) im Bereich des Lenkradkranzes (6) und im radialen Querschnitt gesehen ein U-förmiges Profil hat und zwischen seinen Schenkeln (12) der Einleger (16) geklemmt ist.

10. Fahrzeuglenkrad nach Anspruch 8 oder 9, **dadurch gekennzeichnet, daß** sich der Einleger (16) wellenförmig elastisch gebogen im ringförmigen Aufnahmeraum (14) längs des Lenkradkranzes (6) erstreckt.

11. Fahrzeuglenkrad nach einem der vorhergehenden Ansprüche, **dadurch gekennzeichnet, daß** der Einleger (16) ein rechteckiges Querschnittsprofil besitzt.
